# NEUE EUROPÄISCHE PATENTSCHRIFT

(11) **EP 3 365 171 B2**
(45) Veröffentlichungstag und Bekanntmachung des Hinweises auf die Entscheidung über den Einspruch: **09.04.2025**
(45) Hinweis auf die Patenterteilung: 02.10.2019
(21) Anmeldenummer: 16754421.2
(22) Anmeldetag: 02.08.2016
(51) Int. Cl.: B32B 7/12, B32B 21/02, B32B 21/08, B32B 27/28, B32B 27/30, B32B 27/32, B32B 27/36, A47B 96/20, B29C 48/07, B29C 48/21, E04C 2/16, E04C 2/38, B32B 7/00, B32B 21/00, B44C 5/04

(54) **KANTENPROFIL FÜR EINEN PLATTENFÖRMIGEN WERKSTOFF UND PLATTENFÖRMIGER WERKSTOFF**
EDGE PROFILE FOR A SHEET-LIKE MATERIAL, AND SHEET-LIKE MATERIAL
PROFILÉ D'ARÊTE POUR MATÉRIAU EN FORME DE PLAQUE ET MATÉRIAU EN FORME DE PLAQUE

(30) Priorität: 22.10.2015 DE 102015118055
(43) Veröffentlichungstag der Anmeldung: 29.08.2018
(73) Patentinhaber: Fritz Egger GmbH & Co. OG, 6380 St. Johann in Tirol (AT)
(72) Erfinder: STREICHARDT, Thomas, 48231 Warendorf (DE)
(74) Vertreter: Cohausz & Florack
(86) Internationale Anmeldenummer: PCT/EP2016/068357
(87) Internationale Veröffentlichungsnummer: WO 2017/067683

(56) Entgegenhaltungen:
- EP-A1- 1 163 864
- EP-A1- 1 852 242
- DE-A1- 102006 006 611
- DE-A1- 102008 010 738
- DE-A1- 102008 010 738
- DE-A1- 102011 104 980
- DE-A1- 102011 104 980
- DE-A1- 19 701 594
- DE-A1- 19 701 594
- DE-A1- 4 208 991
- DE-C2- 10 104 296
- DE-U1- 202007 011 911
- DE-U1- 202007 014 991
- DE-U1- 202015 100 800
- DE-U1- 202015 100 800
- DE-U1- 202015 104 158
- DE-U1- 8 700 536
- US-A1- 2008 118 713
- US-A1- 2008 118 713
- REHAU, "DIN EN ISO 11664-4"Deutsche Norm, 2011
- REHAU, "DIN EN ISO CIE 11664-4"Deutsche Norm, 2019
- REHAU, "RAUKANTEX"Broschüre, April 1987
- REHAU, "RAUKANTEX"Broschüre. April 1995
- REHAU, "REKANTEX"Broschüre. Mai 2009
- REHAU , "RAUKANTEX"Broschüre. April 2011

## Beschreibung

Die vorliegende Erfindung betrifft ein Kantenprofil für einen plattenförmigen Werkstoff umfassend einen Schichtaufbau mit einem Grundkörper aus Kunststoff, der einen ersten Grundfarbton aufweist, mit einem Dekorgrund, der einen zweiten Grundfarbton aufweist, und mit einem Dekordruck, wobei ein Enddekor, das einen dritten Grundfarbton aufweist, zumindest gemeinsam aus Dekorgrund und Dekordruck gebildet wird, wobei der Dekorgrund eine zwischen Grundkörper und Dekordruck angeordnete Schicht ist. Ferner betrifft die Erfindung einen plattenförmigen Werkstoff mit einer Oberseite, einer Unterseite und mindestens einer Schmalseite.

Plattenförmige Werkstoffe sind insbesondere Holzwerkstoffplatten, beispielsweise Spanplatten, Faserplatten oder OSB-Platten (oriented strand board), Compaktplatten (Hochdruck-Schichtpressstoffplatten gemäß Europäischer Norm EN 438 Teil 1 bis 7) oder Kunststoffplatten, beispielsweise Platten aus thermoplatischen oder duroplatischen Kunststoffen. Solche Platten werden an ihren Schmalflächen (Seitenkanten) oftmals mit Kunststoffkantenprofilen versehen. Die Kantenprofile werden dabei auf die Schmalseiten der Platte aufgeklebt oder damit, z.B. mittels Laser oder Hotair-Technologie, verschweißt (sogenanntes Bekanten). Die Kantenprofile dienen zum einen als optisch ansprechender Abschluss solcher Platten, zum anderen auch als Schutz der Schmalseiten gegenüber Stößen oder gegenüber dem Eindringen von Feuchtigkeit.

Kantenprofile der eingangs genannten Art werden gemäß Stand der Technik dadurch hergestellt, dass zunächst ein Grundkörper (Substrat) aus Kunststoff durch Extrusion hergestellt wird und dieser Grundkörper anschließend mit mehreren separaten Schichten, darunter mindestens zwei zusammen ein Enddekor bilden versehen wird. Oftmals ist es erwünscht, dass das Enddekor dem Dekor der Platte auf dessen Oberseite und/oder Unterseite, welches auch von einer separaten Beschichtung der Platte gebildet sein kann, möglichst nahe kommt.

Der Grundkörper kann dabei bereits in einer Breite, die üblicherweise 1 bis 4 mm breiter als die Schmalseite der Platte ist, extrudiert werden. Es ist auch bekannt, einen um ein Mehrfaches breiteren Strang zu extrudieren und diesen anschließend in mehrere Grundkörper der Länge nach aufzuteilen (Kalanderverfahren).

Der auf den Grundkörper aufgebrachte Schichtaufbau weist beispielsweise einen Dekorgrund und einen darüber angeordneten Dekordruck auf. Zwischen dem Dekorgrund und dem Dekordruck kann noch ein Druckgrund, eine sogenannte Farbempfangsschicht, angeordnet sein. Zwischen dem Dekorgrund und dem Grundkörper ist ein Primer vorgesehen. Als Abschlussschicht ist auf dem Dekordruck schließlich noch ein Schutzlack vorgesehen.

Bei dem vorgenannten Schichtaufbau ist ein wesentliches Kriterium, dass der Dekorgrund üblicherweise heller ist (eine größere Helligkeit hat) als das Enddekor, welches sich durch die Überlagerung von Dekorgrund und Dekordruck ergibt.

Da Kantenprofile typischerweise mit etwas Überstand an den Schmalseiten der Platte angebracht und der Überstand dann oben und/oder unten durch Kontur-Fräsen und/oder Schneiden entfernt wird, um das Kantenprofil an die tatsächliche Breite der Schmalseite anzupassen, entsteht zwangsläufig eine Schnittkante an der Ober- und/oder Unterseite des Kantenprofils, an der der Grundfarbton des Grundkörpers sichtbar ist. Damit bei der fertig bekanteten Platte später kein Farbunterschied zwischen dem Grundkörper des Kantenprofils und dem Enddekor, das üblicherweise dem Dekor der Platte entspricht, erkennbar ist, ist es bekannt, den Grundfarbton des extrudierten Grundkörpers an den Grundfarbton des Enddekors anzupassen.

Problematisch bei dem Stand der Technik ist, dass der mehrschichtige Aufbau mit Primer, Dekorgrund, Druckgrund (Farbempfangsschicht), Dekordruck und Schutzlack relativ komplex aufgebaut ist. Dabei müssen Primer und Druckgrund auf den Dekordruck und das gewünschte Enddekor abgestimmt werden. Ferner werden die mechanischen Eigenschaften (wie beispielsweise die Oberflächenhärte, Reißdehnung bzw. Reißfestigkeit etc. der Kunststoffkantenprofile durch den mehrschichtigen Aufbau verändert. Diese Veränderung wirkt sich in der Regel negativ bei der Verarbeitung des Kantenprofils aus.

Aus der DE 10 2008 010738 A1 ist ein dekorierter Profilkörper mit einem Substrat, einem Primer, einem separat aufgebrachten, bevorzugt aus einer Universal-Fondschicht und einer Individual-Fondschicht bestehenden Dekorgrund und einer Klarlackschicht bekannt. Aus der DE 10 2011104 980 A1 eine Kantenleiste mit einer mit dem Grundkörper der Kantenleiste koextrudierte Schmelzschicht bekannt. Die DE 20 2015 000 800 U1 offenbart eine Kantenleiste mit einer transparenten oder transluzenten Deckschicht einer Kantenleiste, die mit dem Grundkörper koextrudiert ist.

Davon ausgehend ist es eine Aufgabe der vorliegenden Erfindung, ein Kantenprofil und einen bekanteten plattenförmigen Werkstoff anzugeben, das bzw. der einfacher herzustellen ist.

Die zuvor hergeleitete und aufgezeigte Aufgabe wird gemäß einer ersten Lehre der vorliegenden Erfindung bei einem Kantenprofil für einen plattenförmigen Werkstoff, insbesondere für eine Holzwerkstoff-, Compakt- oder Kunststoffplatte, umfassend einen Schichtaufbau
- mit einem Grundkörper aus Kunststoff, der (zumindest abschnittsweise) einen ersten Grundfarbton aufweist,
- mit einem Dekorgrund, der (zumindest abschnittsweise) einen zweiten Grundfarbton aufweist, und
- mit einem Dekordruck, wobei ein Enddekor, das einen dritten Grundfarbton aufweist, zumindest gemeinsam aus Dekorgrund und Dekordruck, ggf. zusätzlich auch aus dem Grundkörper und/oder weiteren Schichten zwischen Dekorgrund und Dekordruck, gebildet wird,
wobei der Dekorgrund eine zwischen Grundkörper und Dekordruck angeordnete Schicht ist,
dadurch gelöst, dass der Dekorgrund eine mit dem Grundkörper koextrudierte Schicht aus Kunststoff ist und dass der mit dem Grundkörper koextrudierte Dekorgrund eine Schichtdicke in einem Bereich von 5 bis 100 µm aufweist.

"Zumindest abschnittsweise" meint, dass zumindest ein Abschnitt der jeweiligen Schicht (Grundkörper, Dekorgrund, Dekordruck etc.) einen Grundfarbton aufweist, wobei die Abschnitte mit dem jeweiligen Grundfarbton der einzelnen Schichten einander quer zur Verlaufsrichtung der Schichten überdecken. Vorzugsweise weist aber nicht nur ein Abschnitt, sondern die jeweilige gesamte Schicht einen einheitlichen Grundfarbton auf.

Mit "Grundfarbton" ist der pro Flächeneinheit am häufigsten vorkommende Farbton einer Fläche gemeint. Der "Farbton" bezeichnet eine der Grundeigenschaften, die eine Farbe definiert. Weitere Grundeigenschaften sind "Helligkeit" und "Farbsättigung". Der Farbton bezeichnet eine bestimmte Schattierung einer Farbe. Eine Farbe kann mehrere Schattierungen bzw. Farbtöne aufweisen. Beispielsweise gibt es verschiedene Schattierungen bzw. Farbtöne der Farbe Blau oder der Farbe Rot. Ist eine Fläche überwiegend mit ein und derselben Rotschattierung versehen und weist ein schwarzes Muster auf, wobei die Farbe Schwarz einen geringeren Teil der Fläche als der rote Farbton bedeckt (einnimmt), ist der rote Farbton der Grundfarbton der Fläche.

Das Enddekor entsteht durch Überlagerung einzelner sich zumindest abschnittsweise überdeckender Schichten, zumindest durch Überlagerung von Dekorgrund und Dekordruck. Gegebenenfalls entsteht das Enddekor auch durch Überlagerung von Grundkörper, Dekorgrund und Dekordruck, wenn nämlich der Dekorgrund nicht vollständig deckend ist und der Grundkörper bzw. dessen Grundfarbton durchscheint. Bevorzugt ist der Dekorgrund aber vollständig deckend, so dass der Grundkörper bzw. dessen Grundfarbton nicht durchscheint. Auch eventuell zwischen Dekorgrund und Dekordruck vorhandene Schichten können Bestandteil des Enddekors sein, d.h. das Enddekor entsteht dann durch Überlagerung von Grundkörper, Dekorgrund, Dekordruck und der/den zwischen Dekorgrund und Dekordruck vorhandene(n) Schicht(en). Der (dritte) Grundfarbton des Enddekors entsteht entsprechend durch Überlagerung der Grundfarbtöne der jeweiligen sich zumindest abschnittsweise überdeckenden Schichten, zumindest durch Überlagerung der Grundfarbtöne von Dekorgrund und Dekordruck, ggf. auch durch Überlagerung der Grundfarbtöne von Grundkörper, Dekorgrund und Dekordruck (wenn der Dekorgrund nicht vollständig deckend ist und der Grundfarbton des Grundkörpers durchscheint) oder auch durch Überlagerung der Grundfarbtöne von Grundkörper, Dekorgrund, Dekordruck und der/den zwischen Dekorgrund und Dekordruck vorhandene(n) Schicht(en).

"Koextrudiert" meint, dass diese Schicht (der Dekorgrund) zusammen mit dem Grundkörper einen einstückigen Strang bildet. Der den Dekorgrund und den Grundkörper umfassende Strang ist bei einem Extrusionsverfahren bereits einstückig aus der Extruskionsdüse ausgetreten. Dabei sind in Fließrichtung vor der Extrusionsdüse die beiden Schichten (Dekorgrund und Grundkörper) als Schmelze insbesondere unmittelbar zusammengeführt worden, das heißt in dem späteren einstückigen Strang sind die beiden Schichten unmittelbar benachbart zueinander angeordnet.

Indem Grundkörper und Dekorgrund einen einstückigen, durch Extrusion hergestellten Strang bilden, muss zwischen Grundkörper und Dekorgrund kein Primer mehr als separate Schicht angeordnet werden. Der Aufbau des Kantenprofils ist somit sehr viel einfacher, da im einfachsten Fall der Schichtaufbau nur noch den extrudierten Strang und unmittelbar darauf den Dekordruck als weitere Schicht aufweist. Es entfällt damit auch die Notwendigkeit, abhängig vom Dekordruck einen möglichst optimalen Primer auszuwählen. Weiter ist vorteilhaft, dass mechanische Kennwerte des Grundkörpers wesentlich geringer verändert werden (bei herkömmlichen Beschichtungen kann es zu einer Versprödung oder veränderten Oberflächenhärte etc. kommen). Außerdem wird als weiterer Vorteil das Recycling von Produktionsabfällen optimiert, da die koextrudierte Schicht ein Thermoplast bleibt (im Gegensatz zu herkömmlichen Schichten, die durch chemische Vernetzungsreaktionen duroplastische Eigenschaften erhalten). Noch ein Vorteil ist, dass durch die Koextrusion mit anderen oder modifizierten Kunststoffen die Möglichkeit besteht, das Benetzungsverhalten und/oder die Haftung der nachfolgenden Schichten zu optimieren (bei einer herkömmlichen Monoextrusion sind solche Kunststoffe oder Modifizierungen aus wirtschaftlichen Gründen in der Regel nicht nutzbar).

Wie im Weiteren noch erläutert wird, ist außerdem auch bei dem erfindungsgemäßen Kantenprofil gewährleistet, dass zwischen der den Grundkörper bildenden Schicht und der den Dekordruck bildenden Schicht eine Schicht angeordnet ist, die eine höhere Helligkeit als das Enddekor aufweist. Diese Schicht mit der höheren Helligkeit ist besagte koextrudierte Schicht, die den Dekorgrund bildet. Insbesondere kann dabei der Grundkörper und der Dekorgrund einen unterschiedlichen Grundfarbton aufweisen und der Grundfarbton des Grundkörpers insbesondere an den Grundfarbton des Enddekors angepasst sein. Somit ist es wie beim Stand der Technik auch mit dem erfindungsgemäßen Kantenprofil möglich, einzelne Grundprofile (Profil aus Grundkörper und Dekorgrund) einzeln oder als später zu zerteilender Strang zu extrudieren und das endgültige Profil nach dem Anbringen an die Schmalseite des plattenförmigen Werkstoffs durch ober- und/oder unterseitiges Kürzen an die tatsächliche Breite der Schmalseite anzupassen, wobei dann auch insbesondere keine nennenswerten Unterschiede des Grundfarbtons des an der Schnittkante sichtbaren Grundkörpers und des Grundfarbtons des Enddekors und/oder Dekors des plattenförmigen Werkstoffs bestehen.

Im Folgenden werden nun verschiedene Ausgestaltungen des erfindungsgemäßen Kantenprofils beschrieben, die auch Gegenstand der Unteransprüche sind.

Erfindungsgemäß weist der mit dem Grundkörper koextrudierte Dekorgrund eine Schichtdicke, insbesondere durchschnittliche Schichtdicke, in einem Bereich von 5 bis 100 µm, besonders bevorzugt in einem Bereich von 5 bis 30 µm, auf. Indem der Dekorgrund koextrudiert wird, kann dieser auf einfache Weise in relativ geringen Dicken und außerdem über seine Länge auch besonders gleichmäßig (mit besonders gleichmäßiger Dicke) hergestellt werden. Durch die Koextrusion besteht auch nicht die Gefahr, dass sich der Dekorgrund vom Grundkörper lösen kann, was im Stand der Technik durchaus bei einem ungeeigneten Primer zwischen Dekorgrund und Grundkörper im Laufe der Zeit geschehen kann. Außerdem bleiben auch die mechanischen Eigenschaften des Grundkörpers erhalten, da dieser nicht unmittelbar mit einem Primer beschichtet wird.

Gemäß noch einer Ausgestaltung des erfindungsgemäßen Kantenprofils ist vorgesehen, dass der Farbabstand zwischen dem ersten Grundfarbton und dem zweiten Grundfarbton und/oder der Farbabstand zwischen dem zweiten Grundfarbton und dem dritten Grundfarbton in einem Bereich von 2 bis 8 ΔE (Delta E), bevorzugt in einem Bereich von 2 bis 5 ΔE, besonders bevorzugt in einem Bereich von 2,5 bis 4 ΔE, liegt. Wie bereits zuvor angedeutet, können sich der zweite Grundfarbton (Grundfarbton des Dekorgrunds) und der erste Grundfarbton (Grundfarbton des Grundkörpers) und/oder der zweite Grundfarbton und der dritte Grundfarbton (Grundfarbton des Enddekors) voneinander unterscheiden. Der Unterschied wird definiert durch den sogenannten Farbabstand, auch Farbdifferenz genannt. Dabei handelt es sich um den euklidischen Abstand zwischen den Farbwerten (Farborten im L*a*b*-Farbraum bzw. CIELAB-Farbraum). Gemäß dem L*a*b*-Farbsystem (CIELAB-Farbsystem), das in der Europäischen Norm EN ISO 11664-4 definiert ist, hat jeder Farbton jeder Farbe in dem L*a*b*-Farbraum einen durch drei kartesische Koordinaten (L*, a*, b*) genau definierten Farbort, wobei sich auf der a*-Achse Grün und Rot gegenüberliegen, auf der b*-Achse Blau und Gelb gegenüberliegen und die L*-Achse die Helligkeit (Luminanz) definiert.

Wie zuvor erläutert, weist die jeweilige Schicht (Grundkörper, Dekorgrund, Dekordruck etc.) zumindest in einem Flächenabschnitt, vorzugsweise sogar über die gesamte Fläche, einen Grundfarbton auf. Diese einen Grundfarbton aufweisenden Flächen bzw. Flächenabschnitte überlagern sich senkrecht zur Verlaufsrichtung der Schichten, wobei durch die Überlagerung der Flächen bzw. Flächenabschnitte von beispielsweise Dekorgrund und Dekordruck der dritte Grundfarbton entsteht. Da innerhalb eines den jeweiligen Grundfarbton beinhaltenden Flächenabschnitts der Grundfarbton toleranzbedingt etwas schwanken kann, ist mit dem zuvor definierten Farbabstand immer der Durchschnittswert bezogen auf den gesamten den jeweiligen Grundfarbton beinhaltenden Flächenabschnitt der beiden miteinander verglichenen Flächenabschnitte der Schichten gemeint. Entsprechendes gilt auch in dem Fall, dass die ganze Fläche zumindest einer der Schichten einen einheitlichen Grundfarbton hat, der toleranzbedingt innerhalb der ganzen Fläche etwas schwanken kann. Mit dem zuvor definierten Farbabstand ist in diesem Fall immer der Durchschnittswert bezogen auf die gesamte Fläche, die den jeweiligen Grundfarbton beinhaltet, der beiden miteinander verglichenen Flächen oder Flächenabschnitte gemeint. Innerhalb einer Fläche oder eines Flächenabschnitts der jeweiligen Schicht, beispielsweise innerhalb eines Flächenabschnitts des Grundkörpers oder innerhalb eines Flächenabschnitts des Dekorgrunds oder innerhalb eines Flächenabschnitts des Enddekors, ist der toleranzbedingte Farbabstand insbesondere kleiner als 2,5 ΔE, bevorzugt kleiner als 2 ΔE, besonders bevorzugt kleiner als 1,5 ΔE.

Bei einem solch kleinen Farbabstand ist ein Farbunterschied mit dem bloßen Auge kaum oder überhaupt nicht wahrnehmbar (sogenannter "unmerklicher Farbunterschied"). Wie gesagt handelt es sich dabei aber nur um toleranzbedingte Farbunterschiede, die in der Regel kaum vermeidbar sind; idealerweise ist die jeweilige Fläche bzw. der jeweilige Flächenabschnitt aber einfarbig. Dies gilt insbesondere für den Dekorgrund, der bevorzugt einfarbig ist, toleranzbedingt aber einen wie zuvor definierten Farbunterschied innerhalb der Fläche aufweisen kann.

Gemäß wieder einer weiteren Ausgestaltung des erfindungsgemäßen Kantenprofils hat, wie zuvor angedeutet wurde, der Dekorgrund bzw. die Farbe des Dekorgrunds eine größere Helligkeit als der Grundkörper bzw. die Farbe des Grundkörpers. Zusätzlich oder alternativ ist vorgesehen, dass der Dekorgrund bzw. die Farbe des Dekorgrunds eine größere Helligkeit als das Enddekor bzw. die Farbe des Enddekors hat. Die größere Helligkeit der den Dekorgrund bildenden Schicht hat den Vorteil, dass durch Aufbringen des Dekordrucks das Enddekor optimal an eine Vielzahl von Farben bzw. Farbtönen des Dekors des plattenförmigen Werkstoffs angepasst werden kann. Dies gilt insbesondere für den Fall, dass die den Dekordruck bildende Schicht mittels Digitaldruck oder Tiefdruck aufgebracht wird.

Gemäß noch einer Ausgestaltung des erfindungsgemäßen Kantenprofils ist vorgesehen, dass der Farbabstand zwischen dem ersten Grundfarbton und dem dritten Grundfarbton kleiner als 2,5 ΔE, bevorzugt kleiner als 2 ΔE, besonders bevorzugt kleiner als 1,5 ΔE, ist. Durch einen relativ geringen Farbabstand ist gewährleistet, dass zwischen dem Grundfarbton des Grundkörpers und dem Grundfarbton des Enddekors, das durch Überlagerung von Dekorgrund und Dekorgrund gebildet wird, keine nennenswerten Farbabweichungen mit bloßem Auge wahrnehmbar sind. Da der mit dem Grundkörper koextrudierte Dekorgrund wie zuvor beschrieben relativ dünn sein kann, fällt ein Farbunterschied (Farbabstand) und ein Helligkeitsunterschied zwischen dem Dekorgrund und den benachbarten Schichten kaum auf und das Kantenprofil vermittelt dem Betrachter auch dann, wenn es eine Schnittkante aufweist, zusammen mit dem Dekor des plattenförmigen Werkstoffs einen homogenen Farbeindruck.

Gemäß wieder einer weiteren Ausgestaltung des erfindungsgemäßen Kantenprofils ist zwischen dem Dekordruck und dem mit dem Grundkörper koextrudierten Dekorgrund ein Druckgrund (als separat aufgetragene Schicht) angeordnet. Mit einem Druckgrund ist eine sogenannte Farbempfangsschicht gemeint, an der die Farbpartikel der den Dekordruck bildenden Schicht anhaften bzw. mit der sie sich verbinden können. Ein solcher Druckgrund ist insbesondere dann sinnvoll, wenn der Dekordruck mittels eines Digitaldruckverfahrens aufgetragen wird.

Insbesondere ist der Druckgrund die einzige Schicht zwischen dem Dekorgrund und dem Dekordruck. Grundsätzlich ist es aber auch denkbar, zwischen Dekorgrund und Druckgrund mindestens eine Primerschicht anzuordnen. Letzteres ist insbesondere dann sinnvoll, wenn es sich bei dem extrudierten Strang, also der Einheit aus Grundkörper und Dekorgrund, um PP (Polypropylen) handelt.

Gemäß noch einer weiteren Ausgestaltung des erfindungsgemäßen Kantenprofils ist auf der vom Grundkörper abgewandten Seite des Dekordrucks als weitere Schicht ein Schutzlack angeordnet.

Gemäß wiederum einer weiteren Ausgestaltung des erfindungsgemäßen Kantenprofils ist vorgesehen, dass der Druckgrund und/oder die Primerschicht und/oder der Schutzlack farblos (das heißt unbunt bzw. nicht eingefärbt) und/oder transparent ist.

Gemäß noch einer Ausgestaltung des erfindungsgemäßen Kantenprofils ist der Dekordruck eine durch ein Tiefdruckverfahren und/oder Digitaldruckverfahren erzeugte Schicht.

Schließlich ist gemäß noch einer Ausgestaltung des erfindungsgemäßen Kantenprofils der Kunststoff, aus dem der Grundkörper und/oder der Dekorgrund gebildet ist, ABS (Acrylnitril-Butadien-Styrol), PP (Polypropylen), PVC (Polyvinylchlorid), PMMA (Polymethylmethacrylat) oder PET (Polyethylenterephthalat). Dabei bestehen bevorzugt der Grundkörper und der Dekorgrund aus demselben Kunststoff. Grundsätzlich ist es aber auch denkbar, für den Dekorgrund andere Kunststoffe oder modifizierte Kunststoffe der gleichen Basis wie der Grundkörper zu verwenden. Durch die Verwendung eines anderen oder modifizierten Kunststoffs besteht zusätzlich die Möglichkeit, die Haftung der nachfolgenden Schichten zu optimieren. Insbesondere durch die Einbringung polarer Moleküle wie z.B. mit Maleinsäureanhydrid modifizierte Polymere ist eine solche Verbesserung erreichbar und wirtschaftlich darstellbar.

Die zuvor hergeleitete und aufgezeigte Aufgabe wird gemäß einer zweiten Lehre der vorliegenden Erfindung ferner bei einem plattenförmigen Werkstoff, insbesondere einer Holzwerkstoff-, Compakt- oder Kunststoffplatte,
- mit einer Oberseite,
- mit einer Unterseite und
- mit mindestens einer Schmalseite,
dadurch gelöst, dass die mindestens eine Schmalseite mit einem wie zuvor definierten Kantenprofil bekantet (verleimt) ist.

Eine Holzwerkstoffplatte ist insbesondere eine Spanplatte, Faserplatte, OSB-Platte oder Leichtbauplatte (Platte mit Decklagen aus einem Holzwerkstoff und einer leichten Mittellage). Eine Compaktplatte ist eine Platte aus einer Mehrzahl von mit Phenolharz getränkten Lagen von Kernpapieren, die auf zumindest einer Seite ein mit Melaminharz imprägniertes Dekorpapier aufweist, wobei die so geschichteten Lagen unter erhöhtem Druck und bei erhöhter Temperatur zu einer kompakten Platte verpresst sind. Die grundlegenden Eigenschaften, Prüfvorschriften und Anforderungen an diese so genannten dekorativen Hochdruck-Schichtpressstoffplatten (HPL) sind in den Europäischen Normen EN 438 Teil 1 bis 7 definiert. Eine Kunststoffplatte ist insbesondere ein plattenförmiger Körper aus einem thermoplatischen oder duroplastischen Kunststoff.

Zum Anbringen des Kantenprofils an die jeweilige Schmalseite des plattenförmigen Werkstoffs ist der Grundkörper unterseitig, das heißt an der vom Dekorgrund abgewandten Seite, mit einer Schmelzschicht versehen, insbesondere einer Schmelzschicht auf Basis eines thermoplastischen Kunststoffs. Die Schmelzschicht ist beispielsweise in Form einer koextrudierten oder post-koextrudierten Schicht oder als separate Lage auf dem Grundkörper appliziert worden. Vor oder während des Bekantens bzw. des damit verbundenen Anpressens des Kantenprofils an die Schmalseite wird die Schmelzschicht bevorzugt aktiviert. Bevorzugt ist die Schmelzschicht mittels energiereicher Strahlung wie IR- (Infrarot-), insbesondere NIR- (near infrared - kurzwelliger IR-), Laser- und/oder Plasmastrahlung, oder mittels Heißluft aktivierbar.

Gemäß einer Ausgestaltung des plattenförmigen Werkstoffs weist das Kantenprofil mindestens eine Schnittkante auf, deren Oberfläche quer zur Verlaufsrichtung aller Schichten des Schichtaufbaus des Kantenprofils verläuft, wobei die Oberfläche des Grundkörpers einen Abschnitt der Oberfläche der Schnittkante bildet. Eine solche Schnittkante entsteht insbesondere dadurch, dass ein einen Überstand bildender Abschnitt des Kantenprofils, insbesondere nachdem dieses mit der Schmalseite des plattenförmigen Werkstoffs verbunden ist, abgetrennt wird. Ein solcher Abschnitt kann zur Oberseite und/oder Unterseite des plattenförmigen Werkstoffs hin vorstehen, wenn ein Kantenprofil mit der Schmalseite verleimt wird, das eine größere Breite als die Schmalseite hat. Eine Schnittkante kann aber auch dadurch entstehen, dass der Grundkörper zusammen mit dem Dekorgrund als ein Strang extrudiert wird, der ein Mehrfaches der Breite der Schmalseite des plattenförmigen Werkstoffs hat, so dass dieser Strang, vor oder nach dem Aufbringen der weiteren Schichten, der Länge nach zerteilt wird.

Gemäß noch einer Ausgestaltung des erfindungsgemäßen plattenförmigen Werkstoffs ist vorgesehen, dass die Oberseite und/oder Unterseite des plattenförmigen Werkstoffs mit einer ein Dekor aufweisenden Beschichtung beschichtet ist, die (zumindest abschnittsweise, insbesondere zumindest in einem an die Schmalseite mit dem Kantenprofil angrenzenden Abschnitt) einen vierten Grundfarbton aufweist, wobei der Farbabstand zwischen dem ersten Grundfarbton und dem vierten Grundfarbton und/oder zwischen dem dritten Grundfarbton und dem vierten Grundfarbton kleiner als 2,5 ΔE, bevorzugt kleiner als 2 ΔE, besonders bevorzugt kleiner als 1,5 ΔE, ist. Auf diese Weise sind für den Betrachter mit dem bloßen Auge keine Farbunterschiede bzw. Farbtonunterschiede zwischen den einzelnen Oberflächen bzw. Grundfarbtönen wahrnehmbar. Es entsteht bei gleichzeitiger Betrachtung von plattenförmigem Werkstoff und Kantenprofil ein homogener Farbeindruck.

Es gibt nun eine Vielzahl von Möglichkeiten, das erfindungsgemäße Kantenprofil und den erfindungsgemäßen plattenförmigen Werkstoff auszugestalten und weiterzubilden. Diesbezüglich sei einerseits verwiesen auf die den Patentansprüchen 1 und 13 nachgeordneten Patentansprüche, andererseits auf die Beschreibung von Ausführungsbeispielen in Verbindung mit der Zeichnung. In der Zeichnung zeigt:
- Fig. 1: eine schematische Schnittansicht eines plattenförmigen Werkstoffs gemäß der vorliegenden Erfindung,
- Fig. 2a): das Detail II aus Fig. 1 in vergrößerter Darstellung mit einem ersten Ausführungsbeispiel eines erfindungsgemäßen Kantenprofils,
- Fig. 2b): das Detail II aus Fig. 1 in vergrößerter Darstellung mit einem zweiten Ausführungsbeispiel eines erfindungsgemäßen Kantenprofils,
- Fig. 2c): das Detail II aus Fig. 1 in vergrößerter Darstellung mit einem dritten Ausführungsbeispiel eines erfindungsgemäßen Kantenprofils und
- Fig. 2d): das Detail II aus Fig. 1 in vergrößerter Darstellung mit einem vierten Ausführungsbeispiel eines erfindungsgemäßen Kantenprofils.

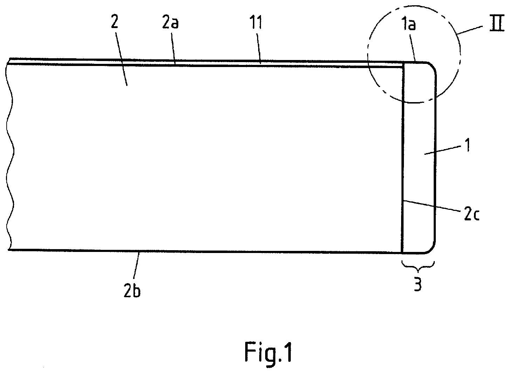

In Fig. 1 ist als plattenförmiger Werkstoff beispielhaft eine Holzwerkstoffplatte 2 mit einem seitlich angebrachten Kantenprofil 1 dargestellt. Die Holzwerkstoffplatte 2 weist eine Oberseite 2a, eine Unterseite 2b und vier Schmalseiten 2c, von denen nur eine dargestellt ist, auf. Das Kantenprofil 1 ist mit der dargestellten Schmalseite 2c verleimt bzw. bekantet.

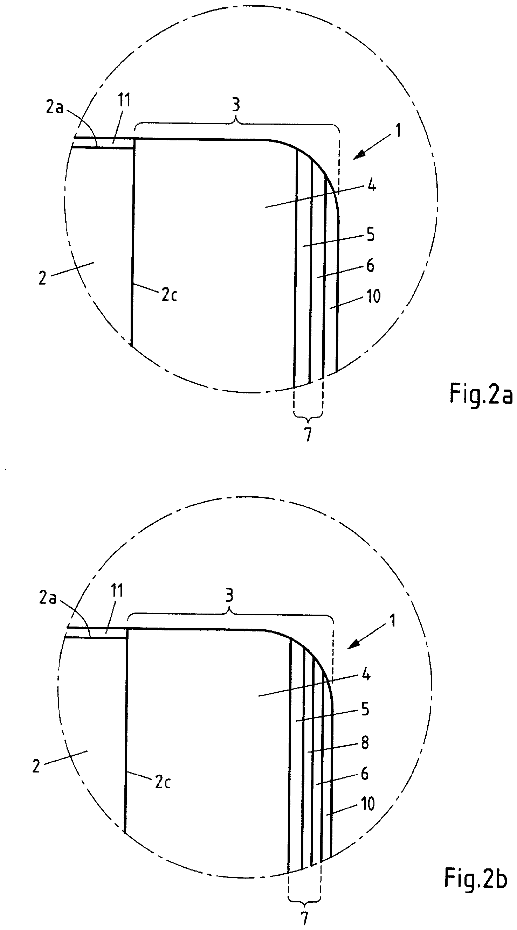

Das Kantenprofil 1 weist, wie die Figuren 2a) bis d) zeigen, einen Schichtaufbau 3 auf, der erfindungsgemäß immer einen Grundkörper 4 aus Kunststoff, einen Dekorgrund 5 ebenfalls aus Kunststoff und einen Dekordruck 6 als Schichten aufweist. Zusätzlich ist in den Ausführungsbeispielen auf dem Dekordruck 6 auch immer als weitere Schicht ein Schutzlack 10 aufgebracht.

Der Grundkörper 4 weist einen ersten Grundfarbton auf und ist mit dem Dekorgrund 5, der einen helleren zweiten Grundfarbton aufweist, durch Koextrusion hergestellt. Der Grundkörper 4 dient zum Verkleben mit der Schmalseite 2c der Holzwerkstoffplatte. Der Dekorgrund 5 dient zum direkten oder indirekten Aufbringen eines Dekordrucks 6, wobei Dekorgrund 5 und Dekordruck 6 (bei Betrachtung senkrecht zum Verlauf der Schichten) zusammen ein Enddekor 7 bilden, das einen dritten Grundfarbton aufweist. Der dritte Grundfarbton hat eine geringere Helligkeit als der zweite Grundfarbton.

Der Farbabstand zwischen erstem Grundfarbton und drittem Grundfarbton soll möglichst gering sein und liegt insbesondere unter 2,5 ΔE, hier beispielsweise bei 1 ΔE. Dagegen ist der Farbabstand zwischen dem ersten Grundfarbton und dem zweiten Grundfarbton genau wie der Farbabstand zwischen dem zweiten Grundfarbton und dem dritten Grundfarbton deutlich höher und liegt insbesondere in einem Bereich von 2 bis 8 ΔE hier beispielsweise bei 5 ΔE.

Die mit dem Grundkörper 4 koextrudierte Schicht, das heißt der Dekorgrund 5, weist hier eine maximale Schichtdicke in einem Bereich von 5 bis 100 µm auf, hier beispielsweise von 15 µm.

Des Weiteren ist bei allen Ausführungsbeispielen zumindest die Oberseite 2a der Holzwerkstoffplatte 2 mit einer ein Dekor aufweisenden Beschichtung 11 beschichtet, beispielsweise mit einer Dekorfolie 11, die einen vierten Grundfarbton aufweist. Der Farbabstand zwischen diesem vierten Grundfarbton und dem ersten Grundfarbton und/oder dritten Grundfarbton ist relativ klein und liegt insbesondere auch unter 2,5 ΔE, beispielsweise bei 1 ΔE. Der Farbabstand zwischen dem vierten Grundfarbton und dem zweiten Grundfarbton ist dagegen relativ groß und liegt in einem Bereich von 2 bis 8 ΔE beispielsweise bei 5 ΔE. Der Vorteil der so gewählten Farbabstände ist, dass eine am Kantenprofil 1 vorgesehene Schnittkante 1a, deren Oberfläche quer zur Verlaufsrichtung aller Schichten des Schichtaufbaus 3 verläuft, keine mit dem bloßen Auge wahrnehmbaren Farbunterschiede zwischen Kantenprofil 1 und Beschichtung 11 der Holzwerkstoffplatte 2 bewirkt.

Im Folgenden wird nun der Aufbau der Kantenprofile 1 gemäß den Ausführungsbeispielen in den Figuren 2a) bis 2d) näher beschrieben.

Das mehrschichtige Kantenprofil 1 in Fig. 2a) weist einen extrudierten Grundkörper 4 und einen damit koextrudierten Dekorgrund 5 auf, wobei Grundkörper 4 und Dekorgrund 5 unmittelbar benachbart zueinander angeordnet sind und hier aus ABS bestehen. Unmittelbar auf den Dekorgrund 5 ist hier mittels eines Tiefdruckverfahrens ein Dekordruck 6 aufgebracht, der nach außen hin von einem Schutzlack 10 abgeschlossen ist. Weitere Schichten sind nicht vorgesehen.

Bei dem Ausführungsbeispiel in Fig. 2b) liegt derselbe Aufbau des Kantenprofils 1 wie bei Fig. 2a) zugrunde, wobei hier als Unterschied jedoch zwischen dem Dekorgrund 5 und dem Dekordruck 6 als weitere Schicht ein Druckgrund (Farbempfangsschicht) 8 angeordnet ist. In diesem Ausführungsbeispiel ist als weiterer Unterschied die von dem Dekordruck 6 gebildete Schicht durch ein Digitaldruckverfahren hergestellt. Bei dem Kunststoff von Grundkörper 4 und Dekorgrund 5 kann es sich hier alternativ zu ABS auch um PP handeln. Weitere Schichten sind nicht vorgesehen.

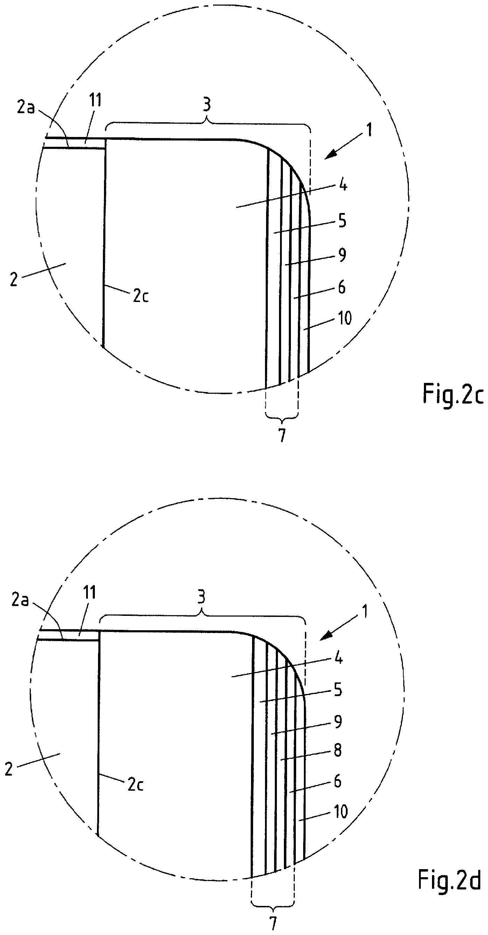

Bei dem Ausführungsbeispiel in Fig. 2c) ist ebenfalls ein Grundkörper 4 mit einem Dekorgrund 5 koextrudiert. In diesem Fall handelt es sich bei dem Material von Grundkörper 4 und Dekorgrund 5 um PP. Der Dekordruck 6 ist hier nicht direkt auf den Dekorgrund 5 aufgebracht, sondern zwischen Dekorgrund 5 und Dekordruck 6 ist noch eine zusätzliche Primerschicht 9 vorgesehen. Der Dekordruck 6 ist mittels eines Tiefdruckverfahrens unmittelbar auf die Primerschicht 9 aufgebracht.

Bei dem Ausführungsbeispiel in Fig. 2d) liegt derselbe Aufbau wie in Fig. 2c) zugrunde. Hier ist als Unterschied jedoch zusätzlich zwischen der Primerschicht 9 und dem Dekordruck 6 noch ein Druckgrund (Farbempfangsschicht) 8 angeordnet. Im Unterschied zu Fig. 2c) ist bei dem Ausführungsbeispiel in Fig. 2d) der Dekordruck 6 außerdem mittels eines Digitaldruckverfahrens aufgebracht. Außer einem Schutzlack 10 sind weitere Schichten nicht vorgesehen.

## Patentansprüche

1. Kantenprofil (1) für einen plattenförmigen Werkstoff (2) umfassend einen Schichtaufbau (3)
- mit einem Grundkörper (4) aus Kunststoff, der einen ersten Grundfarbton aufweist,
- mit einem Dekorgrund (5), der einen zweiten Grundfarbton aufweist, und
- mit einem Dekordruck (6), wobei ein Enddekor (7), das einen dritten Grundfarbton aufweist, zumindest gemeinsam aus Dekorgrund (5) und Dekordruck (6) gebildet wird,
wobei der Dekorgrund (5) eine zwischen Grundkörper (4) und Dekordruck (6) angeordnete Schicht ist,
**dadurch gekennzeichnet,**
- **dass** der Dekorgrund (5) eine mit dem Grundkörper (4) koextrudierte Schicht aus Kunststoff ist und
- **dass** der mit dem Grundkörper (4) koextrudierte Dekorgrund (5) eine Schichtdicke in einem Bereich von 5 bis 100 µm aufweist.

2. Kantenprofil (1) nach Anspruch 1, **dadurch gekennzeichnet, dass** der mit dem Grundkörper (4) koextrudierte Dekorgrund (5) eine Schichtdicke in einem Bereich von 5 bis 30 µm, aufweist.

3. Kantenprofil (1) nach Anspruch 1 oder 2, **dadurch gekennzeichnet, dass** der Farbabstand zwischen dem ersten Grundfarbton und dem zweiten Grundfarbton und/oder der Farbabstand zwischen dem zweiten Grundfarbton und dem dritten Grundfarbton in einem Bereich von 2 bis 8 ΔE, bevorzugt in einem Bereich von 2 bis 5 ΔE, besonders bevorzugt in einem Bereich von 2,5 bis 4 ΔE, liegt.

4. Kantenprofil (1) nach einem der vorangehenden Ansprüche, **dadurch gekennzeichnet, dass** der Dekorgrund (5) eine größere Helligkeit als der Grundkörper (4) und/oder das Enddekor (7) hat.

5. Kantenprofil (1) nach einem der vorangehenden Ansprüche, **dadurch gekennzeichnet, dass** der Farbabstand zwischen dem ersten Grundfarbton und dem dritten Grundfarbton kleiner als 2,5 ΔE, bevorzugt kleiner als 2 ΔE, besonders bevorzugt kleiner als 1,5 ΔE, ist.

6. Kantenprofil (1) nach einem der vorangehenden Ansprüche, **dadurch gekennzeichnet, dass** zwischen dem Dekordruck (6) und dem mit dem Grundkörper (4) koextrudierten Dekorgrund (5) ein Druckgrund (8) angeordnet ist.

7. Kantenprofil (1) nach Anspruch 6, **dadurch gekennzeichnet, dass** der Druckgrund (8) die einzige Schicht zwischen Dekorgrund (5) und Dekordruck (6) ist.

8. Kantenprofil (1) nach Anspruch 6, **dadurch gekennzeichnet, dass** zwischen Dekorgrund (5) und Druckgrund (8) mindestens eine Primerschicht (9) angeordnet ist.

9. Kantenprofil (1) nach einem der vorangehenden Ansprüche, **dadurch gekennzeichnet, dass** auf der vom Grundkörper (4) abgewandten Seite des Dekordrucks (6) als weitere Schicht ein Schutzlack (10) angeordnet ist.

10. Kantenprofil (1) nach einem der Ansprüche 6 bis 9, **dadurch gekennzeichnet, dass** der Druckgrund (8) und/oder die Primerschicht (9) und/oder der Schutzlack (10) farblos und/oder transparent ist.

11. Kantenprofil (1) nach einem der vorangehenden Ansprüche, **dadurch gekennzeichnet, dass** der Dekordruck (6) eine durch ein Tiefdruckverfahren und/oder Digitaldruckverfahren erzeugte Schicht ist.

12. Kantenprofil (1) nach einem der vorangehenden Ansprüche, **dadurch gekennzeichnet, dass** der Kunststoff, aus dem der Grundkörper (4) und/oder der Dekorgrund (5) gebildet ist, ABS, PP, PVC, PMMA oder PET ist.

13. Plattenförmiger Werkstoff (2)
- mit einer Oberseite (2a),
- mit einer Unterseite (2b) und
- mit mindestens einer Schmalseite (2c),
**dadurch gekennzeichnet, dass** die mindestens eine Schmalseite (2c) mit einem Kantenprofil (1) nach einem der vorangehenden Ansprüche bekantet ist.

14. Plattenförmiger Werkstoff (2) nach Anspruch 13, **dadurch gekennzeichnet, dass** das Kantenprofil (1) eine Schnittkante (1a) aufweist, deren Oberfläche quer zur Verlaufsrichtung aller Schichten (4,5,6,8,9,10) des Schichtaufbaus (3) des Kantenprofils (1) verläuft, wobei die Oberfläche des Grundkörpers (4) einen . Abschnitt der Oberfläche der Schnittkante (1a) bildet.

15. Plattenförmiger Werkstoff (2) nach Anspruch 13 oder 14, **dadurch gekennzeichnet, dass** die Oberseite (2a) und/oder Unterseite (2b) des plattenförmigen Werkstoffs (2) mit einer ein Dekor aufweisenden Beschichtung (11) beschichtet ist, die einen vierten Grundfarbton aufweist, wobei der Farbabstand zwischen dem ersten Grundfarbton und dem vierten Grundfarbton und/oder zwischen dem dritten Grundfarbton und dem vierten Grundfarbton kleiner als 2,5 ΔE, bevorzugt kleiner als 2 ΔE, besonders bevorzugt kleiner als 1,5 ΔE, ist.

## Claims

1. Edge profile (1) for a sheet-like material (2), comprising a layered structure (3)
- with a main body (4) made of plastic, which has a first base colour tone,
- with a decorative base material (5), which has a second base colour tone, and
- with a decorative print (6), wherein a final decoration (7), which has a third base colour tone, is formed at least from decorative base material (5) and decorative print (6),
wherein the decorative base material (5) is a layer arranged between main body (4) and decorative print (6),
**characterised**
- **in that** the decorative base material (5) is a layer made of plastic coextruded with the main body (4) and
- **in that** the decorative base material (5) coextruded with the main body (4) has a layer thickness in a range of 5 - 100 µm.

2. Edge profile (1) according to claim 1, **characterised in that** the decorative base material (5) coextruded with the main body (4) has a layer thickness in a range of 5 - 30 µm.

3. Edge profile (1) of claim 1 or 2, **characterised in that** the colour distance between the first base colour tone and the second base colour tone and/or the colour distance between the second base colour tone and the third base colour tone is in a range of 2 - 8 ΔE, preferably in a range of 2 - 5 ΔE, particularly preferably in a range of 2.5 - 4 ΔE.

4. Edge profile (1) according to any one of the preceding claims, **characterised in that** the decorative base material (5) has a greater brightness than the main body (4) and/or the final decoration (7).

5. Edge profile (1) according to any one of the preceding claims, **characterised in that** the colour distance between the first base colour tone and the third base colour tone is shorter than 2.5 ΔE, preferably shorter than 2 ΔE, particularly preferably shorter than 1.5 ΔE.

6. Edge profile (1) according to any one of the preceding claims, **characterised in that** between the decorative print (6) and the decorative base material (5) coextruded with the main body (4) a background (8) is arranged.

7. Edge profile (1) according to claim 6, **characterised in that** the background (8) is the only layer between the decorative base material (5) and the decorative print (6).

8. Edge profile (1) according to claim 6, **characterised in that** between the decorative base material (5) and the background (8) at least one primer layer (9) is arranged.

9. Edge profile (1) according to any one of the preceding claims, **characterised in that** on the side of the decorative print (6) turned away from the main body (4) a protective lacquer (10) is arranged as a further layer.

10. Edge profile (1) according to any one of claims 6 to 9, **characterised in that** the background (8) and/or the primer layer (9) and/or the protective lacquer (10) is colourless and/or transparent.

11. Edge profile (1) according to any one of the preceding claims, **characterised in that** the decorative print (6) is a layer produced by a gravure and/or digital printing method.

12. Edge profile (1) according to any one of the preceding claims, **characterised in that** the plastic from which the main body (4) and/or the decorative base material (5) is made is ABS, PP, PVC, PMMA or PET.

13. Sheet-like material (2)
- with a top (2a),
- with a bottom (2b), and
- with at least one narrow side (2c),
**characterised in that** the at least one narrow side (2c) is edged with an edge profile (1) of one of the above claims.

14. Sheet-like material (2) according to claim 13, **characterised in that** the edge profile (1) has a cut edge (1a), the surface of which runs transversally to the orientation of all layers (4, 5, 6, 8, 9, 10) of the layered structure (3) of the edge profile (1), wherein the surface of the main body (4) forms a section of the surface of the cut edge (1a).

15. Sheet-like material (2) according to claim 13 or 14, **characterised in that** the top (2a) and/or bottom (2b) of the sheet-like material (2) is coated with a coating (11) having a decoration on it, which has a fourth base colour tone, wherein the colour distance between the first base colour tone and the fourth base colour tone and/or between the third base colour tone and the fourth base colour tone is shorter than 2.5 ΔE, preferably shorter than 2 ΔE, particularly preferably shorter than 1.5 ΔE.

## Revendications

1. Profil d'arête (1) pour un matériau en forme de plaque (2) comprenant une structure en couches (3)
- avec un corps de base (4) en matière plastique, qui présente une première teinte de base,
- avec une base décorative (5) qui présente une deuxième teinte de base, et
- avec une impression décorative (6), un décor final (7), qui présente une troisième teinte de base, étant formé au moins conjointement à partir de la base décorative (5) et de l'impression décorative (6),
la base décorative (5) étant une couche disposée entre le corps de base (4) et l'impression décorative (6),
**caractérisé**
- **en ce que** la base décorative (5) est une couche de plastique coextrudée avec le corps de base (4), et
- **en ce que** la base décorative (5) coextrudée avec le corps de base (4) présente une épaisseur de couche dans une plage de 5 à 100 µm.

2. Profil d'arête (1) selon la revendication 1, **caractérisé en ce que** la base décorative (5) coextrudée avec le corps de base (4) présente une épaisseur de couche dans une plage de 5 à 30 µm.

3. Profil d'arête (1) selon la revendication 1 ou 2, **caractérisé en ce que** la distance de couleur entre la première teinte de base et la deuxième teinte de base et/ou la distance de couleur entre la deuxième teinte de base et la troisième teinte de base est comprise entre 2 et 8 ΔE, de préférence entre 2 et 5 ΔE, particulièrement de préférence entre 2,5 et 4 ΔE.

4. Profil d'arête (1) selon l'une des revendications précédentes, **caractérisé en ce que** la base décorative (5) présente une plus grande brillance que le corps de base (4) et/ou le décor final (7).

5. Profil d'arête (1) selon l'une des revendications précédentes, **caractérisé en ce que** la distance de couleur entre la première teinte de base et la troisième teinte de base est inférieure à 2,5 ΔE, de préférence inférieure à 2 ΔE, particulièrement de préférence inférieure à 1,5 ΔE.

6. Profil d'arête (1) selon l'une des revendications précédentes, **caractérisé en ce qu'**une base d'impression (8) est disposée entre l'impression décorative (6) et la base décorative (5) coextrudée avec le corps de base (4).

7. Profil d'arête (1) selon la revendication 6, **caractérisé en ce que** la base d'impression (8) est la seule couche entre la base décorative (5) et l'impression décorative (6).

8. Profil d'arête (1) selon la revendication 6, **caractérisé en ce qu'**au moins une couche de fond (9) est disposée entre la base décorative (5) et la base d'impression (8).

9. Profil d'arête (1) selon l'une des revendications précédentes, **caractérisé en ce qu'**une laque de protection (10) est disposée comme couche supplémentaire sur la face de l'impression décorative (6) détournée du corps de base (4).

10. Profil d'arête (1) selon l'une des revendications 6 à 9, **caractérisé en ce que** la base d'impression (8) et/ou la couche de fond (9) et/ou la laque de protection (10) est incolore et/ou transparente.

11. Profil d'arête (1) selon l'une des revendications précédentes, **caractérisé en ce que** l'impression décorative (6) est une couche produite par un procédé de gravure en creux et/ou un procédé d'impression numérique.

12. Profil d'arête (1) selon l'une des revendications précédentes, **caractérisé en ce que** la matière plastique à partir de laquelle le corps de base (4) et/ou le fond décoratif (5) est formé est ABS, PP, PVC, PMMA ou PET.

13. Matériau en forme de plaque (2)
- avec une face supérieure (2a),
- avec une face inférieure (2b) et
- avec au moins un côté étroit (2c),
**caractérisé en ce que** ledit au moins un côté étroit (2c) est bordé avec un profil d'arête (1) selon l'une des revendications précédentes.

14. Matériau en forme de plaque (2) selon la revendication 13, **caractérisé en ce que** le profil d'arête (1) présente une arête coupée (1a) dont la surface s'étend transversalement à la direction d'extension de toutes les couches (4, 5, 6, 8, 9, 10) de la structure en couches (3) du profil d'arête (1), la surface du corps de base (4) constituant une partie de la surface de l'arête coupée (1a).

15. Matériau en forme de plaque (2) selon la revendication 13 ou 14, **caractérisé en ce que** la face supérieure (2a) et/ou la face inférieure (2b) du matériau en forme de plaque (2) est revêtue d'un revêtement (11) présentant un décor et une quatrième teinte de base, la distance entre la première teinte de base et la quatrième teinte de base et/ou entre la troisième teinte de base et la quatrième teinte de base étant inférieure à 2,5 ΔE, de préférence inférieure à 2 ΔE et particulièrement de préférence inférieure à 1,5 ΔE.
